(19) Europäisches Patentamt
European Patent Office
Office européen des brevets

(11) EP 4 672 479 A1

(12) EUROPEAN PATENT APPLICATION

(43) Date of publication:
31.12.2025 Bulletin 2026/01

(51) International Patent Classification (IPC):
H01M 50/528 (2021.01)    H01M 50/533 (2021.01)
H01M 50/538 (2021.01)    H01M 50/552 (2021.01)
H01M 10/04 (2006.01)

(21) Application number: 24222067.1

(22) Date of filing: 20.12.2024

(52) Cooperative Patent Classification (CPC):
H01M 50/528; H01M 10/04; H01M 50/533;
H01M 50/538; H01M 50/552

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 04.11.2024 CN 202411564205
24.06.2024 CN 202421450967 U

(71) Applicant: CALB Group Co., Ltd.
Changzhou City, Jiangsu Province (CN)

(72) Inventors:
• WANG, Ke
  Changzhou City, Jiangsu Province (CN)
• XU, Jiuling
  Changzhou City, Jiangsu Province (CN)

(74) Representative: Becker, Eberhard
Becker Kurig & Partner
Patentanwälte mbB
Bavariastraße 7
80336 München (DE)

(54) BATTERY AND BATTERY DEVICE

(57) A battery includes a cover plate assembly (1) and two cell units (2). The cover plate assembly (1) includes a cover plate body (11) and a pole (12) disposed on the cover plate body (11); the cell unit (2) includes a cell body (21) and a tab (22) including a fixed part (221) connected to the pole (12) and a free part (222) between the cell body (21) and the fixed part (221). A minimum distance between the two cell units (2) is s after one ends of the two cell units (2) away from the cover plate body (11) opens to a limit state in a direction away from each other; a thickness of the cell unit (2) is d; a length of the fixed part (221) is a; and a length of the free part (222) is c, wherein $1 \le (a + 2\sqrt{\left| c^2 - (d/2)^2 \right|})/s \le 2$.

FIG. 2

## Description

## BACKGROUND

Technical Field

The present invention relates to the technical field of batteries, and more particularly, to a battery and a battery device.

Description of Related Art

In the dual cell battery in which the tab and the pole are directly connected, the length of the tab is limited due to the limitation of the manufacturing process conditions. The thicker the cell body is, the greater the distance from the root of the single-piece tab close to the large face of the cell body to the pole is. Therefore, in order to realize the welding of the tab and the pole, the cell body is closer to the pole. However, when the cell body is closer to the pole, the two cells will interfere with each other when they are combined, resulting in damage to the cell body or tearing of the tab. In addition, when the cell body is close to the pole, it is not conducive to the tab and pole welding construction, and the heat generated during the tab and pole welding may also damage the cell body.

It should be noted that the information disclosed in the background art above is only intended to enhance an understanding of the background of the present disclosure and thus may include information that does not constitute prior art known to those of ordinary skill in the art.

## SUMMARY

The present invention provides a battery capable of improving the technical problems that a multi-cell battery is not easily performed with a cell combination and that tabs and poles are not easily welded.

The battery includes:

a cover plate assembly including a cover plate body and a pole disposed on the cover plate body;
two cell units, wherein the cell units include at least one cell; the cell unit includes a cell body and a tab which includes a fixed part and a free part; the fixed part is directly connected to the pole; the free part is connected between the cell body and the fixed part; the minimum distance between the two cell units is s after one ends of the two cell units away from the cover plate body opens in a direction away from each other to a limit state;
the thickness of the cell unit is d; the length of the fixed part in the direction in which the tab extends is a; and the length of the free part in the direction in which the tab extends is c, wherein

$$1 \leq (a + 2\sqrt{\left|c^2 - (d/2)^2\right|})/s \leq 2 \quad .$$

When the two cell units are fixed on the pole of the same cover plate, the minimum distance between the two cell units is s after one ends of the two cell units away from the cover plate body opens to a limit state in a direction away from each other; according to the thickness of the cell unit of d, the length of the fixed part in the direction in which the tab extends is a, and the length of the free part in the direction in which the tab extends is c.

In combination with a formula ($a + 2\sqrt{\left|c^2 - (d/2)^2\right|}$), it is possible to calculate the minimum distance between the two cell units to prevent collision when the cell is assembled. If $(a + 2\sqrt{\left|c^2 - (d/2)^2\right|})/s$ is too small, that is to say, $(a + 2\sqrt{\left|c^2 - (d/2)^2\right|})/s < 1$, in the process of assembling the cell, the two cell units may collide with each other, thereby damaging the cell units. At the same time, in order to improve the process efficiency, the two cell units may be welded together on the pole. At this time, if $(a + 2\sqrt{\left|c^2 - (d/2)^2\right|})/s$ is too small, the welding tool may not be close to the tab, resulting in poor welding phenomena such as virtual welding, etc. If $(a + 2\sqrt{\left|c^2 - (d/2)^2\right|})/s$ is too small, in the process of welding the tab and the pole, the tab at a side away from the pole in the arrangement direction of the two cell units may be in a tight state, and the cell units may easily break during welding, thereby affecting the overcurrent capacity of the whole cell unit. $(a + 2\sqrt{\left|c^2 - (d/2)^2\right|})/s$ is too large, and the tab is too long to waste the internal space of the battery housing. The present invention provides $1 \leq (a + 2\sqrt{\left|c^2 - (d/2)^2\right|})/s \leq 2$, which can facilitate the cell assembly of the cell unit and the welding of the tab and the pole as well as reduce the heat generated by the welding to damage the cell body, and also avoid the waste of the internal space of the battery housing.

The present exemplary embodiment also provides a battery device that may include the battery described above.

It should be understood that both the foregoing general description and the following detailed description are exemplary and explanatory only and are not restrictive of the disclosure.

## BRIEF DESCRIPTION OF THE DRAWINGS

For a better understanding of the present disclosure, reference may be made to the embodiments illustrated in the following drawings. The components in the drawings are not necessarily to scale, and related elements may be omitted to emphasize and clearly illustrate the features of the present disclosure. In addition, the associated elements or components may have different arrangements as known in the art. Further, in the drawings, like reference numerals designate identical or similar components throughout the several views. In the drawings,

> FIG. 1 is a structurally schematic diagram of one exemplary embodiment of a battery of the present disclosure;
> FIG. 2 is a structurally schematic diagram of a cell unit opening to an extreme position in another exemplary embodiment of the battery of the present disclosure;
> FIG. 3 is a structurally schematic diagram of a cell unit opening to an extreme position in another exemplary embodiment of the battery of the present disclosure;
> FIG. 4 is a structurally schematic diagram of a cell unit opening to an extreme position in another exemplary embodiment of the battery of the present disclosure; and
> FIG. 5 is a structurally schematic diagram of a cell unit opening to an extreme position in another exemplary embodiment of the disclosed battery.

Description of Reference Numerals:

1, cover plate assembly; 2, cell unit; 11, cover plate body; 12, pole; 21, cell body; 22, tab; 221, fixed part; 222, free part; 211, first body part; 212, second body part; 121, welding end face.

## DESCRIPTION OF THE EMBODIMENTS

A clear and complete description of the technical solution in the exemplary example of the present disclosure is provided by the accompanying drawings in the exemplary example of the present disclosure. The example embodiments described herein are for illustrative purposes only and are not intended to limit the scope of the present disclosure. Thus, it should be understood that various modifications and changes may be made to the example embodiments without departing from the scope of the present disclosure.

In the description of the present disclosure, the terms "first" and "second" are used for descriptive purposes only and are not to be construed as indicating or implying relative importance unless explicitly stated or limited otherwise. The term "plurality" means two or more than two. The term "and/or" includes any and all combinations of one or more of the associated listed items. In particular, reference to "the" object or "an" object is also intended to mean one of a possible plurality of such objects.

Unless otherwise specified or indicated, the terms "connected", "fixed", and the like are to be construed broadly, e.g., "connected" may be fixed, or may be detachable, or may be integral, or may be electrically connected, or connected by signals. The "connected" may be a direct connection or an indirect connection by an intermediary. The specific meaning of the above terms in the present disclosure will be understood in specific circumstances by those skilled in the art.

Further, in the description, it should be understood that the terms "upper", "lower", "inner", "outer", and the like in the description of the exemplary examples of the present disclosure are used from the angle shown in the accompanying drawings only and are not to be construed as limiting the embodiments of the present disclosure. It will also be understood that when an element or feature is referred to as connected "on", "under", or "inside" or "outside" another element(s), it can be directly connected connected "on", "under", or "inside" or "outside" the other element(s), but also indirectly connected connected "on", "under", or "inside" or "outside" the other element(s) through intervening elements.

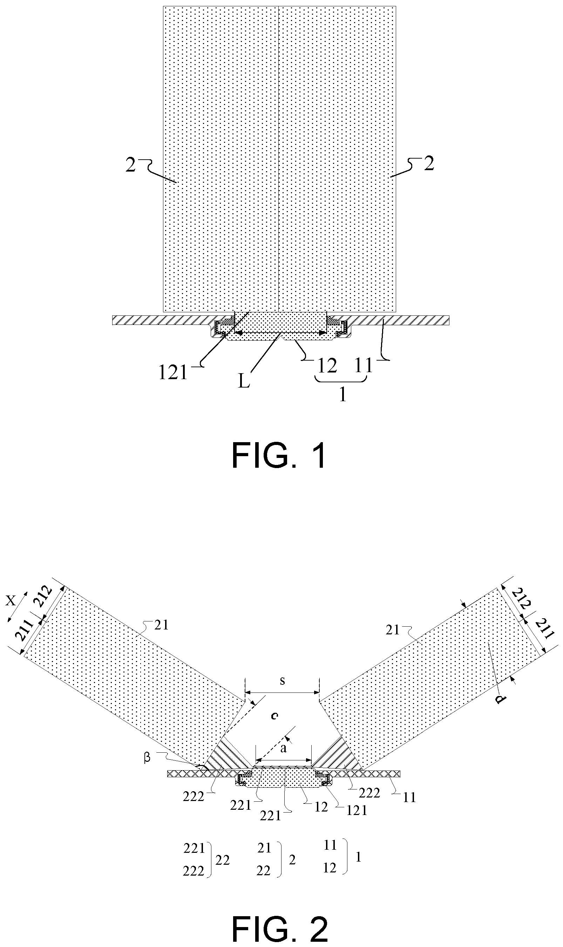

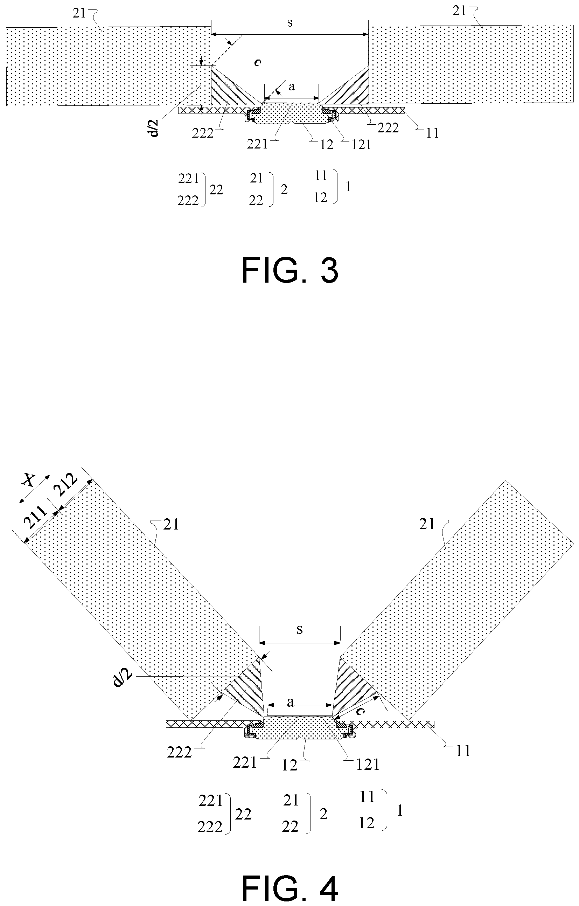

As shown in FIG. 1, FIG. 2 and FIG. 3, FIG. 1 is a structurally schematic diagram of one exemplary embodiment of a battery of the present disclosure; FIG. 2 is a structurally schematic diagram of a cell unit opening to an extreme position in another exemplary embodiment of the battery of the present disclosure; and FIG. 3 is a structurally schematic diagram of a cell unit opening to an extreme position in another exemplary embodiment of the battery of the present disclosure. The battery includes a cover plate assembly 1 and two cell units 2. The cover plate assembly 1 includes a cover plate body 11 and a pole 12 disposed on the cover plate body 11. The cell unit 2 includes at least one cell. The cell unit 2 includes a cell body 21 and a tab 22 which includes a fixed part 221 and a free part 222. The fixed part 221 is directly connected to the pole 12, and the free part 222 is connected between the cell body 21 and the fixed part 221. The minimum distance between the two cell units 2 is s after one end of the two cell units 2 away from the cover plate body 11 opens to a limit state in a direction away from each other. The thickness of the cell unit 2 is d. The length of the fixed part 221 in the direction in which the tab 22 extends is a, and the length of the free part 222 in the direction in which the tab 22 extends is c, wherein 1

$$\leq (a + 2\sqrt{c^2 - (d/2)^2})/s \leq 2 .$$

The present exemplary embodiment provides

$$1 \leq (a + 2\sqrt{\left|c^2 - (d/2)^2\right|})/s \leq 2$$ at a limited tab length, which can facilitate both cell unit cell assembly and tab and pole welding, and can reduce heat generated by welding to damage the cell body. It can prevent the tab from breaking during welding, which affects the overcurrent capability at the entire cell tab.

In this exemplary embodiment, $(a + 2\sqrt{\left|c^2 - (d/2)^2\right|})/s$ may be equal to 1, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, etc.

In the present exemplary embodiment, the battery includes a main housing formed with an opening through which an cell is fitted into the inside of the main housing. A cover plate body 11 is used for fastening the opening. A pole 12 is connected to the cell, the pole 12 being used to form one electrode output of the cell.

Note that the tab 22 may be welded to the pole 12. For example, the tab 22 and the pole 12 may be laser welded or resistance welded. The fixed part 221 of the tab is directly welded to the pole 12. The region of the fixed part 221 is defined by the region of the welding mark between the tab and the pole. The maximum dimension of the welding mark between the fixed part 221 and the pole 12 in the direction in which the two cells are arranged is the length of the fixed part 221 in the direction in which the tab 22 extends. The welding mark between the fixed part 221 and the pole 12 may have a regular shape. For example, the welding mark between the fixed part 221 and the pole 12 may have a rectangular shape. The welding mark between the fixed part 221 and the pole 12 may also have an irregular shape. For example, the welding mark between the fixed part 221 and the pole 12 may have a special shape. d is the average thickness of the cell unit 2.

In the present exemplary embodiment, the two cell units 2 are welded to the pole 12 by one-time welding. As shown in FIG. 2, the angle between the maximum side of the cell unit 2 and the cover plate body 11 may be less than 180° after one ends of the two cell units 2 away from the cover plate assembly 1 opens away from each other to a limit state. In other exemplary embodiments, as shown in FIG. 3, the angle between the largest side of the cell unit 2 and the cover plate body 11 may be equal to 180° after one ends of the two cell units 2 away from the cover plate assembly 1 opens away from each other to a limit state.

In the present exemplary embodiment, as shown in FIG. 2, the cell unit 2 includes a cell, the cell being a winding core. The cell body 21 includes a first body part 211 and a second body part 212 distributed along the thickness direction X thereof. The first body part 211 is located at a side of the second body part 212 away from the other cell unit 2, and the tab 22 extends from the first body part 211. In the present exemplary embodiment, it can realize the structure of the cell unit by extending a single-piece tab of each ring of pole pieces. Accordingly, the thickness of the first main body part 211 and the thickness of the second main body part 212 can be equal. In this case, s shown in FIG. 2 is the minimum distance between the two cell units after one ends of the two cell units 2 away from the cover plate body 11 opens in a direction away from each other to a limit state. The length c of the free part of the tab is the length of the single-piece tab on the side farthest away from the cover plate assembly 1. Herein, under this condition, the average thickness d of the two cell units 2 is in the range of 10 mm $\leq$ d $\leq$ 35 mm, and s is preferably in the range of s $\geq$ 10 mm. For example, d may be equal to 10 mm, 15 mm, 20 mm, 25 mm, 30 mm, 35 mm, etc. s may be equal to 10 mm, 12 mm, 14 mm, 16 mm, 18 mm, 20 mm, 22 mm, 24 mm, 26 mm, 28 mm, 30 mm, 32 mm, 34 mm, 36 mm, 38 mm, 40 mm, etc.

In this exemplary embodiment, as shown in FIG. 4, it is a structurally schematic diagram of a cell unit opening to an extreme position in another exemplary embodiment of the disclosed battery. The tab 22 may lead out from the second body part 212. Likewise, it can realize the structure of the cell unit by extending a single-piece tab of each ring of pole pieces. Accordingly, the thickness of the first main body part 211 and the thickness of the second main body part 212 can be equal. In this case, s shown in FIG. 4 is the minimum distance between the two cell units after one ends of the two cell units 2 away from the cover plate body 11 opens in a direction away from each other to a limit state. The length c of the free part of the tab is the length of the single-piece tab on the side most close to the cover plate assembly 1. In this condition, the average thickness d of the two cell units 2 is in the range of 15 mm $\leq$ d $\leq$ 40 mm, and s is preferably in the range of s $\geq$ 15mm. For example, d may be equal to 15 mm, 20 mm, 25 mm, 30 mm, 35 mm, 40 mm, etc. s may be equal to 15 mm, 16 mm, 18 mm, 20 mm, 22 mm, 24 mm, 26 mm, 28 mm, 30 mm, 32 mm, 34 mm, 36 mm, 38 mm, 40 mm, 42 mm, 45 mm, etc.

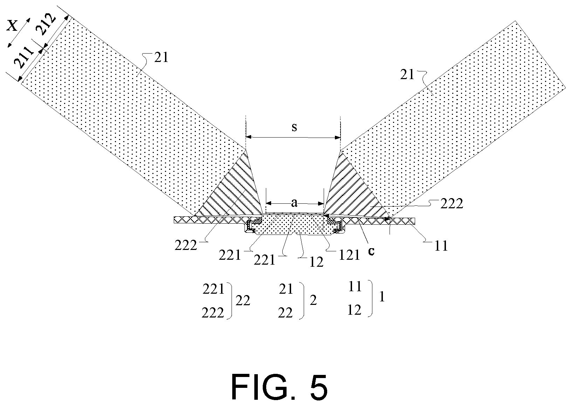

In this exemplary embodiment, as shown in FIG. 5, it is a structurally schematic diagram of a cell unit opening to an extreme position in another exemplary embodiment of the disclosed battery. The tab 22 extends from each position in the thickness direction of the cell body 21. In the present exemplary embodiment, it can realize the structure of the cell unit by way of extending two single-piece tabs by per ring of pole pieces. The two single-piece tabs extended by per ring of pole pieces are arranged opposite to each other in the thickness direction of the cell unit. In this case, s shown in FIG. 5 is the minimum distance between the two cell units after one ends of the two cell units 2 away from the cover plate body 11 opens to a limit state in a direction away from each other. The length c of the free part of the tab is the length of the single-piece tab on a side closest to the cover plate assembly 1. Further, in the present exemplary embodiment, it can realize the cell unit structure by means of an all-tab, i.e., the tab 22 entirely extends from the side of the cell body 21 close to the cover plate body. In this condition, the average thickness d of the two cell units 2 is in the range of 5 mm $\leq$ d $\leq$ 30 mm, and s is preferably in the range of s $\geq$ 8 mm. For example, d may be equal to 5 mm, 10 mm, 15 mm, 20 mm, 25 mm, 30 mm, etc. and s may be equal to 8 mm, 10 mm, 12 mm, 14 mm, 16 mm, 18 mm, 20 mm, 22 mm, 24 mm, 26 mm, 28 mm, 30 mm, 32 mm, 34 mm, 36 mm, 38 mm, etc.

In the present exemplary embodiment, a first welding mark is formed between the tab 22 and the pole 12 of one cell unit 2, and a second welding mark is formed between the tab 22 and the pole 12 of the other cell unit 2. The first welding mark and the second welding mark at least partially overlap. This arrangement allows the tabs 22 in both cell units and the pole 12 to have a large weld area with a limited size of the pole 12. Herein, the tabs 22 of the two cell units can be welded with the poles 12 respectively, namely, after welding one tab 22 with the pole 12, the other tab 22 is welded to the tab 22 which has been welded with the pole 12. In addition, the tabs 22 of the two cell units can also be welded to the pole 12 at the same time, i.e., the tabs 22 are arranged in a stacked manner, and the tabs 22 arranged in a stacked manner can be welded to the pole 12 at the same time.

In the present exemplary embodiment, as shown in FIG. 1 to FIG. 5, the pole 12 includes a welding end face 121 welded to the tab 22. The dimension of the welding end face 121 in the width direction of the cover plate body 11 is L, and a/L is 0.5 to 0.9. For example, a/L may be equal to 0.5, 0.6, 0.7, 0.8, 0.9, etc. The a/L is too small. The length of the fixed part 221 is too small. The welding area of the tab 22 and the pole 12 is small. The welding strength of the tab 22 and the pole 12 is insufficient, and the overcurrent capability of the tab is poor. A/L is too large. The length of the fixed part 221 is too large. The total length of the tab 22 is too large. The tab 22 is prone to the risks of flanging and breaking. The fixed part 221 and the pole are prone to the situation that the plastic is damaged by welding distortion when welding. The present exemplary embodiment sets the a/L to an appropriate size, which can reduce the risks of flanging, breaking and poor flow capacity of the tab, but also ensure the welding strength of the tab and the pole and reduce the risk of damage to the lower plastic.

In the present exemplary embodiment, as shown in FIG. 1 to FIG. 5, the total length of the tab 22 is determined by the sum of the total lengths of the tab securing portion and the tab free part. When the overall length of the tab is preferably in the range of 10 mm $\leq$ a + c $\leq$ 50 mm, then s is preferably in the range of 10 mm $\leq$ s $\leq$ 40 mm. For example, a + c may be equal to 50 mm, 48 mm, 46 mm, 44 mm, 42 mm, 40 mm, 38 mm, 36 mm, 34 mm, 32 mm, 30 mm, 28 mm, 26 mm, 24 mm, 22 mm, 20 mm, 18 mm, 16 mm, 14 mm, 12 mm, 10 mm, etc. s may be equal to 10 mm, 12 mm, 14 mm, 16 mm, 18 mm, 20 mm, 22 mm, 24 mm, 26 mm, 28 mm, 30 mm, 32 mm, 34 mm, 36 mm, 38 mm, 40 mm, etc. The length of the tab 22 is too large, and the tab 22 is easily turned over and broken. The length of the tab 22 is too small, the tab 22 is not easily welded with the pole, and the cell unit 2 is not easily bonded with the cell. In addition, the length of the tab 22 is too small. The welding position of the tab 22 and the pole 12 and the cell body distance are small, thereby easily causing the welding heat of the tab 22 and the pole 12 to be transferred to the active material layer of the cell body, thereby damaging the active material layer. The present exemplary embodiment sets the length of the tab 22 to a suitable size that reduces the risk of the tab 22 flanging or breaking, facilitating the tab and pole welding, and cell bonding of the cell unit, and also reducing the risk of the cell body being damaged.

In the present exemplary embodiment, as shown in FIG. 1 to FIG. 5, the cell unit 2 includes one cell. It should be understood that in other exemplary embodiments, the cell unit 2 may further include a plurality of cells, the plurality of cells being distributed in the thickness direction thereof. Herein, the cell may include an cell body and a sub-tab. The cell body 21 of the cell unit is composed of an cell body of a plurality of cells, and the tab of the cell unit is composed of stacked sub-tabs of the plurality of cells.

It should be noted that the tab 22 includes a plurality of single-piece tabs that are stacked, the single-piece tabs being separable from each other in the free part 222 of the tab 22. When one end of the two cell units 2 away from the cover plate body 11 opens in a direction away from each other, the single-piece tab of the cell unit 2 closest to the other cell unit or the single-piece tab of the cell unit farthest away from the other cell unit will firstly be in a tight state. When the single-piece tab of the cell unit 2 closest to the other cell unit or the single-piece tab of the cell unit farthest away from the other cell unit is in a tight state, the two cell units 2 open to a limit state. For example, as shown in FIG. 2, when the single-piece tab of the cell unit 2 closest to the other cell unit is in a tight state, it means that the two cell units 2 are expanded to a limit state. As shown in FIG. 4 and FIG. 5, when the single-piece tab of the cell unit 2 which is farthest away from the other cell unit is in a tight state, that is to say, the two cell units 2 are expanded to a limit state. In addition, the length of the free part 222 in the direction in which the tab 22 extends refers to the length of the single-piece tab 22 in a strained state in which the tab 22 extends when the two cell units 2 are opened to the limit state.

In addition, it should be noted that when one ends of the two cell units 2 away from the cover plate body 11 is opened in a direction away from each other to a limit state, the cell unit 2 is close to the cover plate body 11 and the edge away from the other cell unit is in contact with the cover plate body.

In the present exemplary embodiment, as shown in FIG. 1 to FIG. 5, after the ends of the two cell units 2 away from the cover plate assembly 1 are expanded in a direction away from each other to a limit state where s, a, and c satisfy

$$1.05 \leq (a + 2\sqrt{\left|c^2 - (d/2)^2\right|})/s \leq 2$$ . In this ex-

emplary embodiment, $(a + 2\sqrt{\left|c^2 - (d/2)^2\right|})/s$ may be equal to 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, etc. The exemplary embodiment sets s to a suitable size, which can avoid not only inserting the tab into the battery cell body due to the tab being too long, but also avoiding occupying too much space inside the battery housing due to the tab being too long, thereby affecting the capacity of the battery, and further preventing the possibility of the battery cell shaking inside the battery housing, thereby reducing the safety risk.

Note that the battery includes an cell and an electrolyte, and the battery is the smallest unit capable of undergoing an electrochemical reaction such as charge/discharge. The cell refers to a unit formed by winding or laminating a stack including a first pole piece, a separator, and a second pole piece. When the first pole piece is a positive pole piece, the second pole is a negative pole piece. Herein, the polarities of the first pole piece and the second pole piece are interchangeable. The first pole piece and the second pole piece are coated with an active material.

In this exemplary embodiment, the battery may be a lithium ion battery. It should be understood that in other exemplary embodiments, the battery may also be a cadmium nickel battery, a nickel metal hydride battery, a lithium polymer battery, a sodium ion battery, a solid state battery, etc.

In other exemplary embodiments, the battery may be a square battery, i.e., the battery may be a quadrangular prism-type battery. The quadrangular prism-type battery mainly refers to a battery whose outer shape is a prism, but does not strictly define whether each side of the prism is necessarily a straight line in a strict sense. The corners between the sides are not necessarily right angles, and may be arc transitions.

The cells may be stacked cells, which are convenient not only for grouping, but also for processing to obtain cells of longer length. Specifically, the cell is a laminated cell, and the cell has a first pole piece, a second pole piece electrically opposite to the first pole piece, and a separator piece arranged between the first pole piece and the second pole piece, so that pairs of the first pole pieces and the second pole pieces are stacked to form the laminated cell.

Alternatively, the battery may be a wound battery, i.e., a first pole piece, a second pole piece electrically opposite to the first pole piece, and a separator piece arranged between the first pole piece and the second pole piece are wound to obtain a wound cell.

The present exemplary embodiment also provides a battery device, which is a battery module or a battery pack.

The battery module includes a plurality of batteries, and the batteries may be square batteries. The battery module may also include an end plate and a side plate for fixing the plurality of batteries.

The battery pack includes a plurality of batteries and a case for fixing the plurality of batteries.

Note that the battery pack includes a plurality of batteries, and the plurality of batteries are provided in the case body. Herein, a plurality of batteries form a battery module and then be mounted in the case body. Alternatively, the plurality of batteries may be disposed directly within the housing, i.e., without grouping the plurality of batteries. The housing may be used to secure the plurality of batteries.

Those skilled in the art will readily think of other embodiments of this disclosure after considering the contents herein disclosed in the specification and practice. The disclosure is intended to cover any variations, uses, or adaptations of the application following the general principles of the disclosure and including common knowledge or customary technical means in the art which are not disclosed in the present disclosure. It is intended that the description and the examples be considered as exemplary only, with a true scope and spirit of the disclosure being indicated by the claims.

The drawings in this disclosure relate only to the structures to which this disclosure relates, and other structures may refer to conventional designs. Without conflict, embodiments of the present disclosure and features of the embodiments may be combined with each other to produce new embodiments. It will be appreciated by those of ordinary skill in the art that technical solutions of this disclosure may be modified or equivalently replaced without deviating from the spirit and scope of the technical solutions of the disclosure, and shall be covered by the scope of the claims of the disclosure.

It should be understood that the present disclosure is not limited to the precise structures described above and shown in the accompanying drawings, and that various modifications and changes may be made without departing from the scope thereof. The scope of the present disclosure is limited only by the appended claims.

**Claims**

1. A battery, **characterized by** comprising:

   a cover plate assembly (1) comprising a cover plate body (11) and a pole (12) disposed on the cover plate body (11);
   two cell units (2), wherein the cell units (2) comprise at least one cell; the cell unit (2) comprises a cell body (21) and a tab (22) which comprises a fixed part (221) and a free part (222); the fixed part (221) is directly connected to the pole (12); the free part (222) is connected between the cell body (21) and the fixed part (221);

wherein a first welding mark is formed between a tab (22) of one of the cell units (2) and the pole (12), and a second welding mark is formed between a tab (22) of the other of the cell units (2) and the pole (12), the first welding mark and the second welding mark at least partially overlapping;

a minimum distance between the two cell units (2) is s after one ends of the two cell units (2) away from the cover plate body (11) opens in a direction away from each other to a limit state;

a thickness of the cell unit (2) is d; a length of the fixed part (221) in a direction in which the tab (22) extends is a; and a length of the free part (222) in the direction in which the tab (22) extends is c,

wherein $1 \leq (a + 2\sqrt{\left| c^2 - (d/2)^2 \right|})/s \leq 2$.

2. The battery according to claim 1, **characterized in that** s, a, c, and d satisfy $1.05 \leq (a + 2\sqrt{\left| c^2 - (d/2)^2 \right|})/s \leq 2$ after an end of both the cell units (2) away from the cover plate assembly (1) opens away from each other to a limit state.

3. The battery according to claim 1, **characterized in that** the cell unit (2) comprises a cell which is a winding core;

    the cell body (21) comprises a first body part (211) and a second body part (212) distributed along a thickness direction thereof; the first body part (211) is located on a side of the second body part (212) away from the other of the cell units (2); and the tab (22) extends from the first body part (211);
    wherein 10 mm $\leq$ d $\leq$ 35 mm, s $\geq$ 10 mm.

4. The battery according to claim 1, **characterized in that** the cell unit (2) comprises a cell which is a winding core;

    the cell body (21) comprises a first body part (211) and a second body part (212) distributed along the thickness direction thereof; the first body part (211) is located on a side of the second body part (212) away from the other of the cell units (2); and the tab (22) extends from the second body part (212);
    wherein 15 mm $\leq$ d $\leq$ 40 mm, s $\geq$ 15 mm.

5. The battery according to claim 1, **characterized in that** the tab (22) extends from each position in the thickness direction of the cell body (21);
    wherein 5 mm $\leq$ d $\leq$ 30 mm, s $\geq$ 8 mm.

6. The battery according to any one of claims 1-5, **characterized in that** the pole (12) comprises a welding end face (121) welded to the tab (22); the welding end face (121) has a dimension L in a width direction of the cover plate body (11); and alL is 0.5-0.9.

7. The battery according to any one of claims 1-2, **characterized in that** 10 mm $\leq$ a + c $\leq$ 50 mm, and 10 mm $\leq$ s $\leq$ 40 mm.

8. The battery according to any one of claims 1-5, **characterized in that** the cell unit (2) comprises a plurality of cells; and the plurality of cells are distributed in the thickness direction.

9. A battery device, **characterized by** comprising the battery according to any one of claims 1-8.

FIG. 1

FIG. 2

s

c

21

21

a

d/2

222

221   12   121

222   11

$\left.\begin{matrix}221\\222\end{matrix}\right\}22$   $\left.\begin{matrix}21\\22\end{matrix}\right\}2$   $\left.\begin{matrix}11\\12\end{matrix}\right\}1$

# FIG. 3

X

211   212

21

21

s

d/2

a

c

222

221   12   121

11

$\left.\begin{matrix}221\\222\end{matrix}\right\}22$   $\left.\begin{matrix}21\\22\end{matrix}\right\}2$   $\left.\begin{matrix}11\\12\end{matrix}\right\}1$

# FIG. 4

FIG. 5

**EUROPEAN SEARCH REPORT**

Application Number

EP 24 22 2067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 000706 B2 (TOYOTA IND CORP) 19 January 2022 (2022-01-19) * paragraphs [0002], [0014], [0032] – paragraph [0035]; figures 1-3c) * | 1-9 | INV. H01M50/528 H01M50/533 H01M50/538 H01M50/552 |
| A | US 2021/359363 A1 (QI BINWEI [CN] ET AL) 18 November 2021 (2021-11-18) * figures 10-11 * | 1-9 | H01M10/04 |
| A | US 11 594 789 B2 (TOYOTA JIDOSHOKKI KK [JP]) 28 February 2023 (2023-02-28) * figure 7 * | 1-9 | |

TECHNICAL FIELDS
SEARCHED        (IPC)

H01M

The present search report has been drawn up for all claims

| Place of search | Date of completion of the search | Examiner |
|---|---|---|
| The Hague | 22 September 2025 | Malagoli, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 2067

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2025

| Patent document cited in search report | | | Publication date | Patent family member(s) | | Publication date |
|---|---|---|---|---|---|---|
| JP 7000706 | B2 | | 19-01-2022 | JP | 7000706 B2 | 19-01-2022 |
| | | | | JP | 2018200841 A | 20-12-2018 |
| US 2021359363 | A1 | | 18-11-2021 | CN | 111446408 A | 24-07-2020 |
| | | | | CN | 112201909 A | 08-01-2021 |
| | | | | EP | 3910727 A1 | 17-11-2021 |
| | | | | US | 2021359363 A1 | 18-11-2021 |
| US 11594789 | B2 | | 28-02-2023 | CN | 110800130 A | 14-02-2020 |
| | | | | JP | 6922980 B2 | 18-08-2021 |
| | | | | JP | WO2018235428 A1 | 19-03-2020 |
| | | | | US | 2020144583 A1 | 07-05-2020 |
| | | | | WO | 2018235428 A1 | 27-12-2018 |

EPO FORM P0459

For more details about this annex : see Official Journal of the European Patent Office, No. 12/82